# EUROPÄISCHE PATENTSCHRIFT

(11) **EP 3 999 749 B1**
(45) Veröffentlichungstag und Bekanntmachung des Hinweises auf die Patenterteilung: **09.08.2023**
(21) Anmeldenummer: 20731463.4
(22) Anmeldetag: 08.06.2020
(51) Int. Cl.: F16C 17/02, F16C 43/02

(54) **FOLIENLAGER**
FOIL BEARING
PALIER À FEUILLES

(30) Priorität: 16.07.2019 DE 102019210456
(43) Veröffentlichungstag der Anmeldung: 25.05.2022
(73) Patentinhaber: Robert Bosch GmbH, 70442 Stuttgart (DE)
(72) Erfinder: WESSNER, Jochen, 73728 Esslingen (DE); WIEDMANN, Felix, 76877 Offenbach An Der Queich (DE)
(86) Internationale Anmeldenummer: PCT/EP2020/065820
(87) Internationale Veröffentlichungsnummer: WO 2021/008776

(56) Entgegenhaltungen:
- EP-A1- 0 927 831
- EP-A1- 2 886 888
- EP-A1- 2 937 584
- EP-A1- 3 096 028
- KR-A- 20100 045 253

## Beschreibung

Die Erfindung betrifft ein Folienlager nach der Gattung des Anspruchs 1.

### Stand der Technik

Ein solches Folienlager ist durch die EP 0 927 831 A1 bekannt. Dieses Folienlager weist eine Lagerhülse auf, innerhalb der wenigstens eine Folie angeordnet ist, die in der Lagerhülse fixiert ist. Zur Fixierung der wenigstens einen Folie weist die Lagerhülse an ihrem Innenmantel T-förmige Stege auf, die in Richtung der Längsachse der Lagerhülse verlaufen. Die Stege bilden dabei Vertiefungen und die wenigstens eine Folie wird mit ihren

Umfangsendabschnitten jeweils unter einen der T-förmigen Stege eingeschoben und ist dann zwischen zwei benachbarten Stegen in Umfangsrichtung fixiert. Die Herstellung der Lagerhülse mit den T-förmigen Stegen ist aufwendig, da die Lagerhülse hierzu spanabhebend an ihrem Innenmantel bearbeitet werden muss. Hierdurch ist das Folienlager auch teuer in der Herstellung.

Durch die EP 2 886 888 A1 ist ebenfalls ein Folienlager gemäß dem Oberbegriff des Anspruchs 1 bekannt, das eine Lagerhülse aufweist, innerhalb der wenigstens eine Folie angeordnet und fixiert ist. Die Lagerhülse weist zwei in Umfangsrichtung der Lagerhülse zueinander versetzt angeordnete Längsnuten auf, die Vertiefungen bilden, in die zwei entgegengesetzte Umfangsendabschnitte der wenigstens einen Folie eingreifen. Die Längsnuten sind aufwendig durch spanabhebende Bearbeitung der Innenseite der Lagerhülse herzustellen.

Durch die EP 3 096 028 A1 ist ebenfalls ein Folienlager bekannt, das im Aufbau gleich ist wie das gemäß der EP 2 886 888 A1 und aufwendig herzustellende Vertiefungen in Form von Längsnuten aufweist, in die zwei entgegengesetzte Umfangsendabschnitte der Folie eingreifen.

Auch durch die EP 2 937 584 A1 ist ein Folienlager bekannt, das im Aufbau gleich ist wie das gemäß der EP 2 886 888 A1 und aufwendig herzustellende Vertiefungen in Form von Längsnuten aufweist, in die zwei entgegengesetzte Umfangsendabschnitte der Folie eingreifen.

### Offenbarung der Erfindung

### Vorteile der Erfindung

Das erfindungsgemäße Folienlager mit den Merkmalen des Anspruchs 1 hat den Vorteil, dass auf einfache Weise eine Fixierung der wenigstens einen Folie ermöglicht ist. Die Herstellung der als Bohrungen ausgebildeten Öffnungen ist sehr einfach möglich, so dass das Folienlager kostengünstig hergestellt werden kann.

In den abhängigen Ansprüchen sind vorteilhafte Ausgestaltungen und Weiterbildungen der Erfindung angegeben.

Durch die Ausbildung gemäß Anspruch 2 und Anspruch 3 ist die Fixierung der wenigstens einen Folie weiter verbessert. Die Ausbildungen gemäß den Ansprüchen 5 bis 7 ermöglichen eine sichere Fixierung der wenigstens einen Folie sowohl in radialer Richtung als auch in Richtung der Längsachse der Lagerhülse.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Zeichnung

Ein Ausführungsbeispiel der Erfindung ist in der Zeichnung dargestellt und in der nachfolgenden Beschreibung näher erläutert. Es zeigen:
- Figur 1: ein Folienlager in einem Querschnitt mit einer Lagerhülse und in dieser angeordneten Folien,
- Figur 2: die Lagerhülse im Querschnitt ohne Folien,
- Figur 3: die Lagerhülse in einer Seitenansicht,
- Figur 4: eine Folie in einem Ausgangszustand vor der Anordnung in der Lagerhülse,
- Figur 5: einen Ausschnitt der Folie von Figur 4 in einer modifizierten Ausführung und
- Figur 6: einen Ausschnitt der Folie von Figur 4 in einer weiteren modifizierten Ausführung.

### Beschreibung des Ausführungsbeispiels

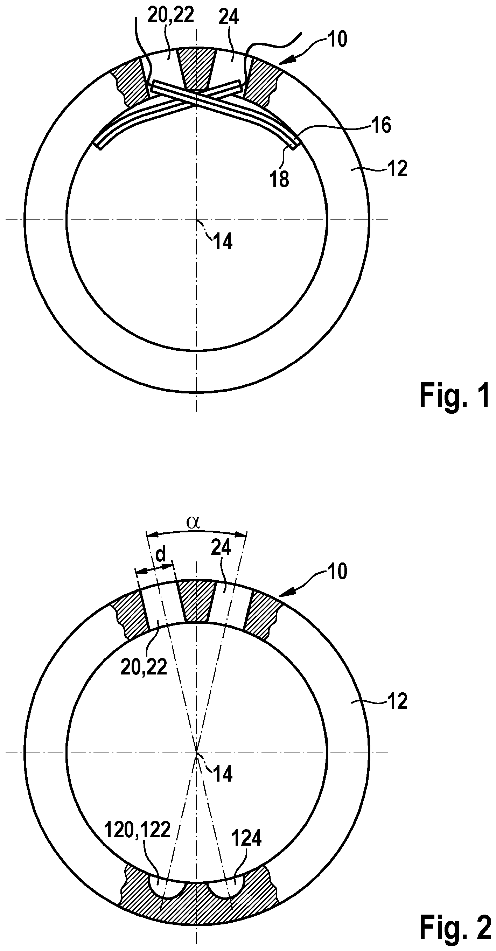

In den Figuren 1 bis 6 ist ein Folienlager 10 mit einer hohlzylinderförmigen Lagerhülse 12 dargestellt. Die Lagerhülse 12 wird auch als Lagerring bezeichnet und hat im Wesentlichen die Gestalt eines geraden, hohlen Kreiszylinders mit einer Längsachse 14. Im Inneren der Lagerhülse 12 sind zwei Folien 16, 18 des Folienlagers 10 angeordnet. Die Folie 16 wird auch als Beam, Bump oder Unterfolie bezeichnet und ist zwischen der Lagerhülse 12 und der Folie 18 angeordnet, die auch als Topfolie oder Oberfolie bezeichnet wird. Das Folienlager 10 dient zur drehbaren Lagerung einer nicht dargestellten Welle, die an der Folie 18 anliegt.

Die Lagerhülse 12 weist in ihrem Mantel in den Figuren 1 bis 3 dargestellte Öffnungen 20, 22, 24 auf, die eine Geometrie zur Fixierung der Folien 16, 18 in der Lagerhülse 12 bilden. Die Öffnungen 20, 22, 24 sind als Bohrungen ausgebildet, die von der Außenseite her in die Lagerhülse 12 eingebracht sind. Die Öffnungen 20, 22, 24 weisen jeweils einen Durchmesser d auf.

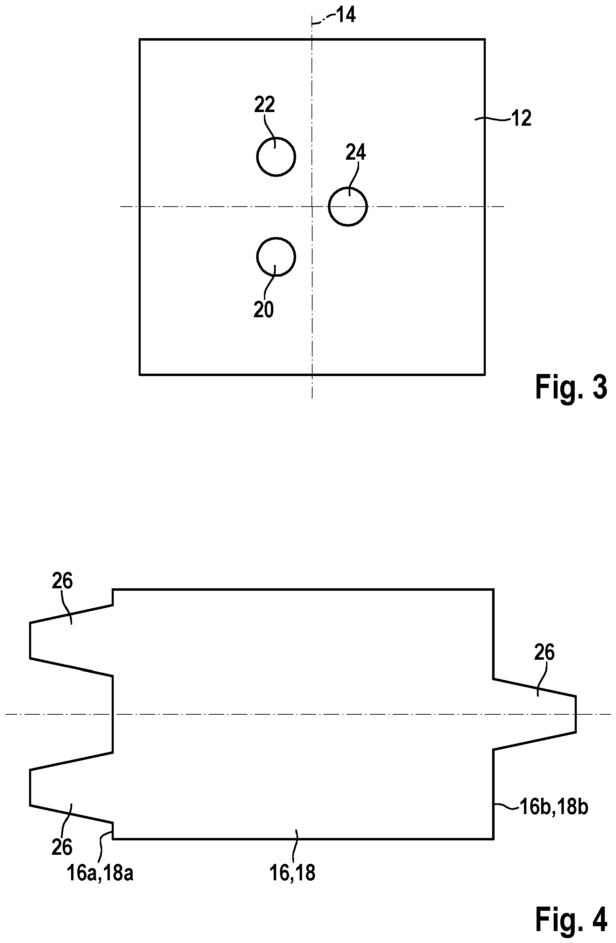

Die beiden Öffnungen 20, 22, die nachfolgend als erste Öffnung 20 und zweite Öffnung 22 bezeichnet werden, sind wie in Figur 3 dargestellt in Richtung der Längsachse 14 der Lagerhülse 12 zueinander versetzt auf einer Linie L parallel zur Längsachse 14 angeordnet. Die Öffnung 24 wird nachfolgend als dritte Öffnung 24 bezeichnet und ist in Umfangsrichtung der Lagerhülse 12 bezüglich der ersten und zweiten Öffnungen 20, 22 versetzt angeordnet. Zwischen der ersten und zweiten Öffnung 20,22 und der dritten Öffnung 24 ist wie in Figur 2 dargestellt bezogen auf die Längsachse 14 der Lagerhülse 12 ein Winkel α vorhanden. Vorzugsweise ist die dritte Öffnung 24 in Richtung der Längsachse 14 der Lagerhülse 12 betrachtet zwischen der ersten Öffnung 20 und der zweiten Öffnung 22 angeordnet, insbesondere zumindest annähernd mittig zwischen der ersten Öffnung 20 und der zweiten Öffnung 22 wie in Figur 3 dargestellt. Die erste Öffnung 20 und die zweite Öffnung 22 sind in einer ersten Umfangslage der Lagerhülse 12 angeordnet und die dritte Öffnung 24 ist in einer zweiten Umfangslage der Lagerhülse 12 angeordnet.

Anstelle der durchgehenden erfindungsgemäßen Öffnungen 20, 22, 24 können auch in nicht erfindungsgemäßer Weise Vertiefungen 120, 122, 124 im Innenmantel der Lagerhülse 12 vorgesehen sein wie dies in Figur 2 im unteren Bereich der Lagerhülse 12 dargestellt ist. Diese Vertiefungen 120, 122, 124 müssen jedoch vom Inneren der Lagerhülse 12 her eingebracht werden und sind als Ansenkungen ausgebildet.

In Figur 4 sind die Folien 16, 18 in einem abgewickelten Zustand vor deren Anordnung innerhalb der Lagerhülse 12 dargestellt. An ihren beiden in Umfangsrichtung weisenden entgegengesetzten Umfangsendabschnitten 16a, 18a und 16b, 18b weisen die Folien 16, 18 jeweils wenigstens eine Stecklasche 26 auf, die jeweils eine geringere Breite b aufweisen als die Breite B der Folien 16, 18 in Richtung der Längsachse 14 der Lagerhülse 12. Am einen Umfangsendabschnitt 16a, 18a der Folien 16, 18 sind zwei in Richtung der Längsachse 14 zueinander versetzt angeordnete Stecklaschen 26 vorhanden und am anderen Umfangsendabschnitt 16b, 18b der Folien 16, 18 ist nur eine Stecklasche 26 vorhanden. Es kann auch vorgesehen sein, dass an beiden Umfangsendabschnitten der Folien nur eine Stecklasche 26 oder jeweils mehrere, auch mehr als zwei, Stecklaschen 26 vorhanden sind.

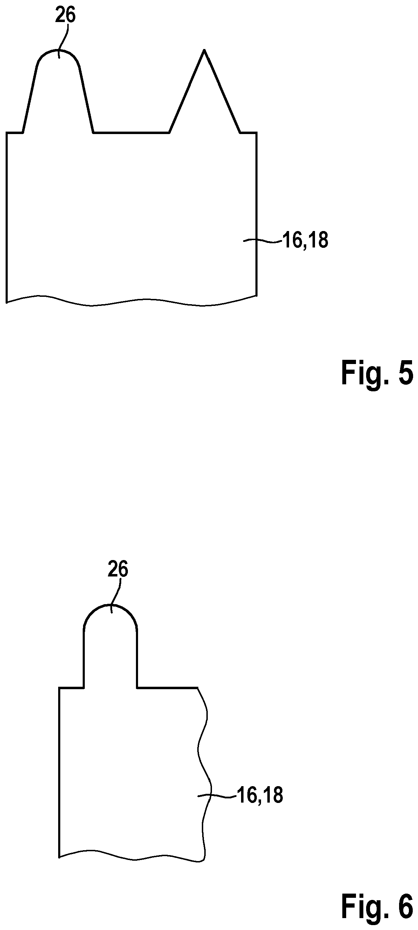

Die Stecklaschen 26 sind vorzugsweise so ausgebildet, dass diese sich zu ihren freien Enden hin verjüngen, also deren Breite b abnimmt. Die Stecklaschen 26 können dabei wie in Figur 4 dargestellt zumindest annähernd trapezförmig ausgebildet sein. Alternativ können die Stecklaschen 26 auch wie in Figur 5 dargestellt etwa dreieckförmig oder zahnförmig ausgebildet sein oder wie in Figur 6 dargestellt etwa rechteckförmig mit gerundeten Enden.

Die Folien 16, 18 mit den Stecklaschen 26 können beispielsweise als Metallfolien ausgebildet sein und durch Stanzen hergestellt werden. Zwischen den beiden Folien 16, 18 kann noch eine dritte Folie angeordnet sein.

Zur Anordnung der Folien 16, 18 innerhalb der Lagerhülse 12 werden diese zusammengerollt auf einen Durchmesser der kleiner ist als der Innendurchmesser der Lagerhülse 12 und in Richtung der Längsachse 14 in die Lagerhülse 12 eingeführt. Die am Umfangsendabschnitt 16a, 18a der Folien 16, 18 vorhandenen Stecklaschen 26 werden in die erste Öffnung 20 bzw. zweite Öffnung 22 der Lagerhülse 12 eingeführt und die Stecklasche 26 des anderen Umfangsendabschnitts 16b, 18b der Folien 16, 18 wird in die dritte Öffnung 24 der Lagerhülse 12 eingeführt. Die Folien 16, 18 federn dabei in Umfangsrichtung der Lagerhülse 12 auseinander und die Stecklaschen 26 verhacken sich in den Öffnungen 20, 22, 24 wodurch die Folien 16, 18 in radial Richtung und in Richtung der Längsachse 14 in der Lagerhülse 12 fixiert sind. Da die Stecklaschen 26 in Richtung der Längsachse 14 zueinander versetzt angeordnet sind kollidieren diese nicht miteinander und diese können in die Öffnungen 20, 22, 24 eingeführt werden.

Die Größe des Winkels α und des Durchmessers d der Öffnungen 20, 22, 24 sowie die Breite b der Stecklaschen 26 sind geeignet bestimmt um einen sicheren Halt der Stecklaschen 26 in den Öffnungen 20, 22, 24 und damit eine sichere Fixierung der Folien 16, 18 zu ermöglichen.

Die Welle gehört zum Beispiel zu einem (ebenfalls nicht dargestellten) Rotor einer Strömungsmaschine. Die Strömungsmaschine ist zum Beispiel Teil einer Luftversorgungseinheit in einem Brennstoffzellensystem. In dem Brennstoffzellensystem ist die Strömungsmaschine zum Beispiel als Verdichter ausgeführt. Der Verdichter umfasst ein Verdichterrad, das vorteilhafter Bestandteil des Rotors ist.

## Patentansprüche

1. Folienlager (10) mit mindestens einer Folie (16, 18), die innerhalb einer Lagerhülse (12) angeordnet und in dieser fixiert ist, wobei die Lagerhülse (12) wenigstens zwei in Umfangsrichtung der Lagerhülse (12) zueinander versetzt angeordnete Öffnungen (20, 22, 24) aufweist, in die zwei entgegengesetzte Umfangsendabschnitte (16a, 16b, 18a, 18b) der wenigstens einen Folie (16, 18) eingreifen, **dadurch gekennzeichnet, dass** die Öffnungen (20, 22, 24) als Bohrungen ausgebildet sind.

2. Folienlager nach Anspruch 1, **dadurch gekennzeichnet, dass** wenigstens zwei Öffnungen (20, 22) in Richtung der Längsachse (14) der Lagerhülse (12) zueinander versetzt angeordnet sind.

3. Folienlager nach Anspruch 2, **dadurch gekennzeichnet, dass** in einer ersten Umfangslage wenigstens eine erste Öffnung (20) und in Richtung der Längsachse (14) der Lagerhülse (12) zur ersten Öffnung (20) versetzt wenigstens eine zweite Öffnung (22) vorgesehen ist und dass in einer zweiten Umfangslage wenigstens eine dritte Öffnung (24) vorgesehen ist, die in Richtung der Längsachse (14) der Lagerhülse (12) bezüglich der ersten und zweiten Öffnung (20, 22) versetzt angeordnet ist.

4. Folienlager nach Anspruch 3, **dadurch gekennzeichnet, dass** die wenigstens eine dritte Öffnung (24) in Richtung der Längsachse (14) der Lagerhülse (12) betrachtet zwischen der wenigstens einen ersten Öffnung (20) und der wenigstens einen zweiten Öffnung (22) angeordnet ist.

5. Folienlager nach einem der vorhergehenden Ansprüche, **dadurch gekennzeichnet, dass** wenigstens einer der Umfangsendabschnitte (16a, 16b 18a, 18b) der wenigstens einen Folie (16, 18) wenigstens eine Stecklasche (26) aufweist, die in wenigstens eine der Öffnungen (20, 22, 24) eingreift.

6. Folienlager nach Anspruch 5, **dadurch gekennzeichnet, dass** sich die wenigstens eine Stecklasche (26) in Umfangsrichtung zu ihrem freien Ende hin verjüngt.

7. Folienlager nach Anspruch 6, **dadurch gekennzeichnet, dass** die wenigstens eine Stecklasche (26) zumindest annähernd trapezförmig oder dreieckförmig oder rechteckförmig mit abgerundetem Ende ausgebildet ist.

8. Folienlager nach einem der vorstehenden Ansprüche, **dadurch gekennzeichnet, dass** das Folienlager (10) wenigstens eine Oberfolie (18) und eine Unterfolie (16) aufweist, die zwischen der Oberfolie (18) und der Lagerhülse (12) angeordnet ist.

## Claims

1. Foil bearing (10) having at least one foil (16, 18), which is arranged and fixed inside a bearing bushing (12), wherein the bearing bushing (12) has at least two openings (20, 22, 24) arranged offset with respect to one another in the circumferential direction of the bearing bushing (12), into which openings two opposite circumferential end sections (16a, 16b, 18a, 18b) of the at least one foil (16, 18) engage, **characterized in that** the openings (20, 22, 24) are designed as bores.

2. Foil bearing according to Claim 1, **characterized in that** at least two openings (20, 22) are arranged offset with respect to one another in the direction of the longitudinal axis (14) of the bearing bushing (12) .

3. Foil bearing according to Claim 2, **characterized in that**, in a first circumferential position, at least one first opening (20) is provided, and, in the direction of the longitudinal axis (14) of the bearing bushing (12), at least one second opening (22) is provided, said second opening being offset with respect to the first opening (20), and **in that**, in a second circumferential position, at least one third opening (24) is provided, which is arranged offset with respect to the first and second openings (20, 22) in the direction of the longitudinal axis (14) of the bearing bushing (12).

4. Foil bearing according to Claim 3, **characterized in that**, when viewed in the direction of the longitudinal axis (14) of the bearing bushing (12), the at least one third opening (24) is arranged between the at least one first opening (20) and the at least one second opening (22).

5. Foil bearing according to any of the preceding claims, **characterized in that** at least one of the circumferential end sections (16a, 16b, 18a, 18b) of the at least one foil (16, 18) has at least one insertion tab (26), which engages in at least one of the openings (20, 22, 24).

6. Foil bearing according to Claim 5, **characterized in that** the at least one insertion tab (26) tapers in the circumferential direction towards its free end.

7. Foil bearing according to Claim 6, **characterized in that** the at least one insertion tab (26) is designed to be at least approximately trapezoidal or triangular or rectangular with a rounded end.

8. Foil bearing according to any of the preceding claims, **characterized in that** the foil bearing (10) has at least one upper foil (18) and one lower foil (16), which is arranged between the upper foil (18) and the bearing bushing (12).

## Revendications

1. Palier à feuilles (10) avec au moins une feuille (16, 18), qui est agencée à l'intérieur d'une enveloppe de palier (12) et fixée dans celle-ci, l'enveloppe de palier (12) présentant au moins deux ouvertures (20, 22 et 24) agencées en décalage l'une par rapport à l'autre dans la direction périphérique de l'enveloppe de palier (12), dans lesquelles s'engagent deux sections d'extrémité périphériques opposées (16a, 16b, 18a, 18b) de l'au moins une feuille (16, 18),
**caractérisé en ce que** les ouvertures (20, 22, 24) sont réalisées sous forme d'alésages.

2. Palier à feuilles selon la revendication 1, **caractérisé en ce qu'**au moins deux ouvertures (20, 22) sont agencées en décalage l'une par rapport à l'autre dans la direction de l'axe longitudinal (14) de l'enveloppe de palier (12).

3. Palier à feuilles selon la revendication 2, **caractérisé en ce qu'**il est prévu, dans une première position périphérique, au moins une première ouverture (20) et, en décalage par rapport à la première ouverture (20) dans la direction de l'axe longitudinal (14) de l'enveloppe de palier (12), au moins une deuxième ouverture (22), et **en ce qu'**il est prévu, dans une deuxième position périphérique, au moins une troisième ouverture (24) qui est agencée en décalage dans la direction de l'axe longitudinal (14) de l'enveloppe de palier (12) par rapport aux première et deuxième ouvertures (20, 22).

4. Palier à feuilles selon la revendication 3, **caractérisé en ce que** l'au moins une troisième ouverture (24) est agencée entre l'au moins une première ouverture (20) et l'au moins une deuxième ouverture (22), considérée dans la direction de l'axe longitudinal (14) de l'enveloppe de palier (12).

5. Palier à feuilles selon l'une quelconque des revendications précédentes, **caractérisé en ce qu'**au moins l'une des sections d'extrémité périphériques (16a, 16b, 18a, 18b) de l'au moins une feuille (16, 18) présente au moins une patte d'enfichage (26) qui s'engage dans au moins l'une des ouvertures (20, 22, 24).

6. Palier à feuilles selon la revendication 5, **caractérisé en ce que** l'au moins une patte d'enfichage (26) se rétrécit vers son extrémité libre dans la direction périphérique.

7. Palier à feuilles selon la revendication 6, **caractérisé en ce que** l'au moins une patte d'enfichage (26) est réalisée au moins approximativement sous forme trapézoïdale ou sous forme triangulaire ou sous forme rectangulaire avec une extrémité arrondie.

8. Palier à feuilles selon l'une quelconque des revendications précédentes, **caractérisé en ce que** le palier à feuilles (10) présente au moins une feuille supérieure (18) et une feuille inférieure (16) qui est agencée entre la feuille supérieure (18) et l'enveloppe de palier (12).
